# FASCICULE DE BREVET EUROPEEN

(11) **EP 4 247 677 B1**
(45) Date de publication et mention de la délivrance du brevet: **21.05.2025**
(21) Numéro de dépôt: 21811378.5
(22) Date de dépôt: 22.11.2021
(51) Int. Cl.: B60T 8/1755, B60T 8/172, B60T 8/32, B60T 13/74

(54) **PROCÉDÉ DE COMMANDE DU COUPLE DE SERRAGE D'UN FREIN ÉLECTROMÉCANIQUE AMÉLIORÉ**
VERBESSERTES VERFAHREN ZUR STEUERUNG DES ANZUGSMOMENTS EINER ELEKTROMECHANISCHEN BREMSE
IMPROVED METHOD FOR CONTROLLING THE TIGHTENING TORQUE OF AN ELECTROMECHANICAL BRAKE

(30) Priorité: 23.11.2020 FR 2012030
(43) Date de publication de la demande: 27.09.2023
(73) Titulaire: Hitachi Astemo France, 93700 Drancy (FR)
(72) Inventeur: RAMDANE, Abdessamed, 60000 BEAUVAIS (FR); DELMEIRE, Dimitri, 95130 FRANCONVILLE (FR); AUGUSTE, Antony, 94350 VILLIERS-SUR-MARNE (FR)
(74) Mandataire: LLR
(86) Numéro de dépôt international: PCT/EP2021/082566
(87) Numéro de publication internationale: WO 2022/106709

(56) Documents cités:
- US-A- 6 079 801
- US-A- 6 079 801
- US-B2- 10 759 399
- US-B2- 10 759 399
- US-B2- 10 800 386
- US-B2- 10 800 386

## Description

L'invention concerne le domaine des actionneurs de freinage de véhicule automobile, plus particulièrement les freins électromécaniques, et les procédés permettant de commander leur couple de serrage.

Un système de freinage d'un véhicule automobile comporte en général des moyens mécaniques de serrage du frein comprenant notamment des moyens de friction, tels que des plaquettes de frein, reliés à un actionneur apte à déplacer ces moyens de friction en direction de la roue du véhicule pour l'enserrer et ainsi freiner le véhicule par friction, ou de les écarter dans le but de cesser le freinage. Dans le cas d'un frein électromécanique, les moyens mécaniques de serrage sont commandés par un moteur électrique muni d'un arbre rotatif qui les entraîne.

Pour commander le couple de serrage de freins électromécaniques pour véhicule, il est connu de l'état de la technique de procéder en régulant le couple de serrage en fonction d'indicateurs basés sur les données issues de capteurs. Ces derniers sont en général placés au niveau du moteur électrique ou de l'actionneur déplaçant les moyens de friction. Par exemple, il est connu d'utiliser les données issues d'un capteur d'efforts entre le moteur et l'actionneur pour asservir la commande de couple de serrage du frein et ainsi tenter d'obtenir la décélération du véhicule désirée.

Toutefois, outre le coût et la complexité induits par la mise en place et l'exploitation d'un tel capteur d'efforts, celui-ci ne permet de tenir compte que des facteurs influençant le couple de serrage dépendants du moteur électrique et de l'actionneur. En particulier, il ne permet pas de rendre compte des facteurs liés au reste du système de freinage, et encore moins du véhicule automobile en général et de son environnement, comme par exemple le gonflement des plaquettes de frein sous l'effet de la chaleur entraîné par le freinage, l'état de la route sur lequel roule le véhicule, etc.

US 6 079 801 A décrit un procédé de commande d'un système de freinage électromécanique dans lequel on mesure la vitesse des roues du véhicule au moyen de capteurs, puis on détermine en fonction de la vitesse ainsi mesurée l'accélération des roues pour déterminer l'effort de freinage maximal pouvant être atteint sans bloquer les roues.

L'invention a ainsi pour but de fournir un procédé de commande d'un couple de serrage d'un frein électromécanique qui tienne compte de davantage de paramètres que ceux liés au moteur électrique du frein et son actionneur.

A cet effet, l'invention a pour objet un procédé de commande de couple de serrage d'un frein électromécanique pour véhicule automobile, le frein comportant un moteur électrique muni d'un arbre rotatif destiné à entraîner des moyens mécaniques de serrage de frein,
caractérisé en ce qu'il comprend les étapes suivantes :
- on acquiert des données issues d'un capteur de vitesse de roue effectuant une mesure caractéristique de la vitesse d'au moins une des roues du véhicule,
- on détermine, en fonction des données issues du capteur de vitesse de roue, un indicateur de décélération caractéristique de l'accélération du véhicule,
- on régule le couple de serrage en fonction de l'indicateur de décélération.

Grâce au fait que l'on utilise un capteur effectuant une mesure caractéristique de la vitesse d'une roue du véhicule, on peut tenir compte, pour réguler le couple de serrage du frein, de paramètres liés au véhicule automobile en général et son environnement. Un tel procédé permet ainsi d'obtenir un contrôle du freinage qui soit plus précis que ce que permet les procédés de commande de l'art antérieur. De plus, un capteur de vitesse étant moins onéreux et moins difficile à exploiter qu'un capteur d'efforts, le procédé selon l'invention est moins coûteux dans sa mise en œuvre.

Selon un mode de réalisation de l'invention, un actionneur modifie des moyens de friction en fonction du couple de serrage ainsi régulé.

Selon un mode de réalisation préféré de l'invention, le capteur de vitesse de roue fait partie d'un système d'antiblocage de roues ou de contrôle électronique de la trajectoire déjà présent dans le véhicule. Ceci permet de réduire les coûts de mise en œuvre du procédé puisque l'on réutilise un système déjà présent dans la plupart des véhicules, voire dans la quasi-totalité des véhicules neufs. De plus, on utilise des données dont l'on sait qu'elles sont fiables et précises compte tenu des normes de sécurité qu'un système d'antiblocage de roues doit respecter.

De préférence, on régule le couple de serrage également en fonction d'un indicateur qui caractérise la position du moteur électrique, dit indicateur de position, calculé en fonction des données issues d'un capteur effectuant une mesure d'un paramètre lié à la rotation de l'arbre du moteur, dit capteur de rotation. Réguler le couple de serrage du moteur en fonction de sa position permet d'améliorer encore davantage la précision du procédé de commande.

Selon un mode de réalisation de l'invention préférentiel, on régule le couple de serrage également en fonction des données issues d'un capteur effectuant une mesure d'un paramètre lié à l'intensité du courant électrique alimentant le moteur électrique, dit capteur de courant. Réguler le couple de serrage du moteur en fonction de sa position permet d'améliorer encore davantage la précision du procédé de commande.

Selon un mode de réalisation particulier de l'invention, on régule le couple de serrage également en fonction d'une consigne de freinage, la consigne de freinage correspondant de préférence à l'acquisition d'un état d'une pédale de frein.

Selon un mode particulier de réalisation de l'invention, on enregistre, durant une période prédéterminée, les données issues du capteur de vitesse de roue et l'on construit un modèle physique de l'évolution de la décélération en fonction de l'évolution de l'indicateur de position, ce modèle physique étant fonction des données issues du capteur de vitesse de roue ainsi enregistrées.

Avantageusement, en cas d'indisponibilité temporaire des données issues du capteur de vitesse de roue, on régule le couple de serrage en fonction des données issues du modèle physique. De cette manière, on conserve un certain degré de précision dans la commande du couple de serrage malgré une indisponibilité temporaire du capteur de vitesse de roue, que le modèle physique permet de suppléer le temps qu'il soit à nouveau disponible.

Selon un autre mode particulier de réalisation de l'invention, on enregistre, durant une période prédéterminée, les données issues du capteur de vitesse de roue et on les filtre à travers un filtre de prédiction, de préférence un filtre de Kalman.

Avantageusement, en cas d'indisponibilité temporaire des données issues du capteur de vitesse de roue, on régule le couple de serrage en fonction des données issues du filtre de prédiction relatives à un état estimé des données du capteur de vitesse de roue. De cette manière, on conserve un certain degré de précision dans la commande du couple de serrage malgré une indisponibilité temporaire du capteur de vitesse de roue, que l'état estimé des données du capteurs de vitesse de roue issues du filtre de prédiction permettent de suppléer le temps qu'il soit à nouveau disponible.

De préférence, à l'aide du capteur de vitesse de roue, on détecte si au moins une des roues du véhicule est bloquée, et en cas de blocage d'au moins une des roues, le système d'antiblocage des roues ou de contrôle électronique de la trajectoire envoie une commande de couple de serrage du frein électromécanique. De cette manière, le système d'antiblocage des roues ou de contrôle électronique de la trajectoire peut suppléer la commande de freinage en cas de blocage des roues, ce qui permet d'apporter une sécurité supplémentaire au véhicule.

L'invention concerne également un système de freinage apte à mettre en œuvre le procédé selon l'invention.

L'invention concerne également un véhicule comprenant le système de freinage selon l'invention.

### Brève description de la figure

L'invention sera mieux comprise à la lecture de la description qui va suivre donnée uniquement à titre d'exemple et faite en se référant au dessin annexé dans lequel :

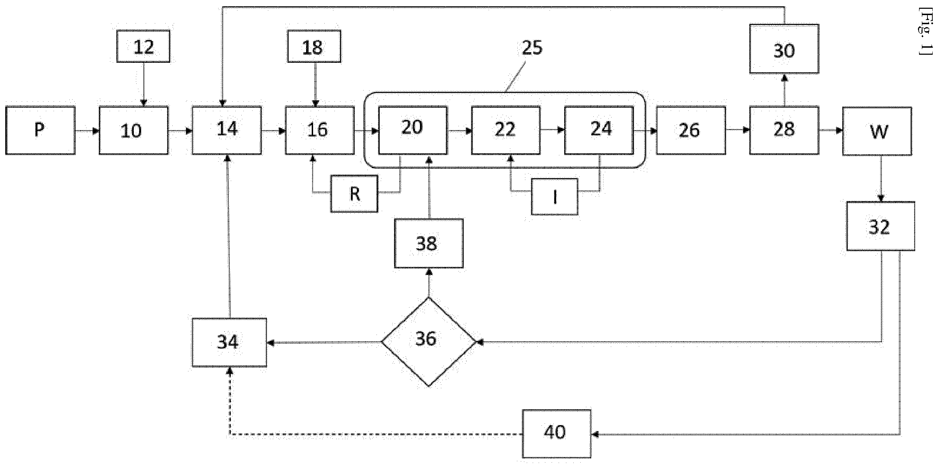

[Fig.1] la [Fig.1] est un schéma représentant un ordinogramme de fonctionnement du procédé de commande de couple de freinage d'un frein électromécanique selon un mode de réalisation particulier de l'invention.

### Description détaillée

On a représenté à la [Fig.1] un schéma représentant un ordinogramme de fonctionnement du procédé de commande de couple de freinage d'un frein électromécanique selon un mode de réalisation particulier de l'invention.

Le frein électromécanique comprend, de façon classique, un moteur électrique muni d'un arbre rotatif destiné à entraîner des moyens mécaniques de serrage de frein (non représentés). Le moteur électrique est de préférence un moteur électrique sans balais (« brushless » en terminologie anglo-saxonne). S'agissant d'un frein électromécanique connu en soi, il ne sera pas décrit davantage ici.

Les moyens mécaniques de serrage de frein sont commandés par une commande de couple de serrage. Afin de commander le couple de serrage de frein, on génère une commande de décélération, qui correspond à une décélération souhaitée pour le véhicule automobile. Cette commande de décélération peut par exemple provenir d'un conducteur du véhicule, en actionnant une pédale de frein P, et cette commande est transmise à un organe de requête de décélération 10. La commande de décélération peut également provenir d'un ordinateur contrôlant un véhicule autonome, ou encore un poste de commande contrôlant le véhicule à distance, etc.

La commande de décélération désirée est convertie en commande de serrage brute de couple à l'aide d'un modèle de conversion de décélération 12, connu en soi, donnant le couple de serrage en fonction de la commande de décélération. On entend ici par commande de serrage brute une commande de serrage qui résulte directement de la conversion de la commande de décélération issue de l'organe de requête de décélération, autrement dit qui n'a pas encore bénéficiée d'un asservissement.

La commande de serrage brute ainsi obtenue est envoyée vers un organe de contrôle de décélération 14 qui, au cours d'une étape de contrôle de la commande de décélération, va obtenir des informations de divers indicateurs et ajuster la commande de couple de serrage brute. La commande de couple de serrage brute sera alors convertie en couple de serrage à atteindre, en fonction de ces indicateurs, notamment sur la base d'un asservissement de la commande de couple de serrage comme on le verra plus loin.

La commande de couple de serrage à atteindre est envoyée vers un organe de détermination de la position cible du moteur 16, qui convertit la commande de couple de serrage en commande de position cible brute du moteur à l'aide d'un modèle de conversion de couple de serrage 18, connu en soi, donnant la position cible du moteur en fonction de la commande de couple de serrage à atteindre.

Puis, la commande de position cible brute du moteur est envoyée vers un organe de contrôle de la position du moteur 20. La position du moteur est en parallèle repérée par un indicateur de position calculé en fonction des données issues d'un capteur de rotation R effectuant une mesure d'un paramètre lié à la rotation de l'arbre du moteur.

Les données de position du moteur ainsi relevées sont renvoyées vers l'organe de détermination de la position cible du moteur 16, afin de comparer l'écart entre la position réelle du moteur et la position cible du moteur. Autrement dit, on réalise un asservissement de la commande de positionnement du moteur. Ainsi, on régule le couple de serrage également en fonction de l'indicateur qui caractérise la position du moteur électrique.

Ensuite, la commande de position du moteur 20 est envoyée à un organe de détermination d'intensité 22 d'alimentation du moteur, afin d'adapter la commande d'intensité du courant d'alimentation du moteur à la position du moteur.

Puis, la commande d'intensité cible d'alimentation est envoyée vers un organe de contrôle de l'intensité du courant d'alimentation moteur 24. L'intensité du courant d'alimentation du moteur est en parallèle repérée par un indicateur de courant calculé en fonction des données issues d'un capteur d'intensité I du courant d'alimentation.

Les données de position du moteur ainsi relevées sont renvoyées vers l'organe de détermination d'intensité 22 d'alimentation du moteur, afin de comparer l'écart entre l'intensité réelle du courant d'alimentation et l'intensité cible du courant d'alimentation. Autrement dit, on réalise un asservissement de la commande d'intensité du courant d'alimentation du moteur. Ainsi, on régule le couple de serrage également en fonction des données issues du capteur I effectuant une mesure d'un paramètre lié à l'intensité du courant électrique alimentant le moteur électrique.

De préférence, l'organe de contrôle de la position du moteur 20, l'organe de détermination d'intensité 22 d'alimentation du moteur et l'organe de contrôle de l'intensité du courant d'alimentation moteur 24 sont contrôlés par une loi de commande adaptée comme par exemple à flux orienté 25 (« field-oriented control » en terminologie anglo-saxonne), en six étapes (« six step » en terminologie anglo-saxonne) ou en mode coulissant (SMC pour « sliding mode control » en terminologie anglo-saxonne).

Les commandes d'intensité d'alimentation et de position du moteur ainsi asservies sont envoyées à un organe de calcul de la course d'un actionneur 26 de freinage qui déplace des moyens de friction de la roue W en fonction de ces commandes. Cet organe de calcul de la course d'un actionneur 26 envoie ensuite le résultat du calcul de la course de l'actionneur à un organe de calcul de couple de serrage 28 à atteindre.

Le résultat du calcul du couple de serrage à atteindre est envoyé à un organe de calcul de la décélération moteur 30, qui calcule, en fonction du résultat du calcul du couple de serrage à atteindre, une décélération qui correspond à la décélération du véhicule automobile en tenant compte uniquement du calcul du couple de serrage à atteindre résultant de l'action du moteur du frein électromécanique. On la qualifie de « décélération moteur » car elle ne tient compte que des paramètres liés au moteur du frein électromécanique, sans tenir compte a priori d'autres facteurs tels que par exemple l'influence de la chaleur sur les plaquettes de frein, ou encore l'environnement dans lequel évolue le véhicule, tel que par exemple l'état de surface de la route.

Le résultat du calcul de la décélération moteur est envoyé vers l'organe de contrôle de décélération 14, afin de comparer l'écart entre la décélération moteur ainsi calculée et la commande de décélération désirée. Autrement dit, on réalise un asservissement de la commande de décélération basée sur le calcul de la décélération moteur.

Les moyens de friction influent naturellement sur la vitesse de la roue. On obtient à cet égard, au cours d'une étape de collecte des données de vitesse de roue, des données issues d'un capteur de vitesse de roue 32 (« wheel speed sensor » en terminologie anglo-saxonne) effectuant une mesure caractéristique de la vitesse d'au moins une des roues du véhicule.

Dans le mode de réalisation représenté à la [Fig.1], afin de tirer parti d'un équipement déjà présent dans le véhicule, le capteur de vitesse de roue 32 fait partie d'un système d'antiblocage de roues ou de contrôle électronique de la trajection, tels que ceux connus sous la marque ABS de l'allemand « Antiblockiersystem » ou ESP de l'anglais « Electronic Stability Program », déjà présent dans le véhicule automobile. La collecte des données de vitesse de roue se fait par exemple à intervalle de temps régulier et est envoyée périodiquement à l'organe de contrôle de décélération 14 comme on va le voir plus loin.

A l'aide du capteur de vitesse de roue 32, on détecte, via par exemple un dispositif de détection de blocage 36, si au moins une des roues du véhicule est bloquée. En cas de blocage d'au moins une des roues, le système d'antiblocage des roues 38 envoie une commande de couple de serrage du frein électromécanique. Cette fonction est dans le mode de réalisation préféré de l'invention exercée par le système ABS déjà présent dans le véhicule automobile. De cette manière, le système d'antiblocage 38 des roues peut suppléer la commande de freinage en cas de blocage des roues, ce qui permet d'apporter une sécurité supplémentaire au véhicule.

Si aucun blocage des roues n'est détecté, au cours d'une étape de calcul de décélération, on obtient un indicateur de décélération caractéristique de l'accélération du véhicule en fonction des données issues du capteur de vitesse de roue 32. Cet indicateur de décélération de roue est calculé à l'aide d'un calculateur de décélération de roue 34 Cet indicateur est qualifié de « décélération de roue » car il tient compte de paramètres influant sur la vitesse de la roue, et donc de facteurs tels que par exemple l'influence de la chaleur sur les plaquettes de frein ou l'environnement dans lequel évolue le véhicule, tel que par exemple l'état de surface de la route.

La valeur de cet indicateur de décélération est ensuite transmise à l'organe de contrôle de décélération 14, afin de comparer l'écart entre la décélération moteur ainsi calculée et la commande de décélération désirée. Autrement dit, on réalise un asservissement de la commande de décélération à atteindre basée sur le calcul de la décélération de roue.

Par ailleurs, dans le mode de réalisation préféré représenté sur la [Fig.1], on enregistre, durant une période prédéterminée, les données issues du capteur de vitesse de roue et on les filtre à travers un filtre de prédiction 40. Le filtre de prédiction 40 est de préférence un filtre de Kalman.

Ainsi, en cas d'indisponibilité temporaire des données issues du capteur de vitesse de roue 32, on régule le couple de serrage en fonction des données issues du filtre de prédiction 40 relatives à un état estimé des données du capteur de vitesse de roue 32. De cette manière, on conserve un certain degré de précision dans la commande du couple de serrage malgré une indisponibilité temporaire du capteur de vitesse de roue, que l'état estimé des données du capteurs de vitesse de roue 32 issues du filtre de prédiction permettent de suppléer le temps qu'il soit à nouveau disponible.

Pour cela, dans le mode de réalisation illustré à la [Fig.1], les données du capteur de vitesse de roue 32 filtrées par le filtre de prédiction 40 sont envoyées directement à l'organe de contrôle de décélération 14, qui détecte si aucune nouvelle donnée en provenance du capteur de vitesse de roue 32 n'est disponible après une période de temps prédéterminée. Dans ce cas, ce sont les données relatives à l'état estimé des données du capteur de vitesse de roue 32 issues du filtre de prédiction 40 qui sont envoyées vers le calculateur de décélération de roue 34. Le calculateur de décélération de roue 34 envoie alors l'indicateur de décélération qu'il a calculé à l'organe de contrôle de décélération 14.

Dans un mode de réalisation alternatif, on enregistre, durant une période prédéterminée, les données issues du capteur de vitesse de roue 32 et l'on construit un modèle physique de l'évolution de la décélération en fonction de l'évolution de l'indicateur de position, ce modèle physique étant fonction des données issues du capteur de vitesse de roue 32 ainsi enregistrées. Ce modèle est notamment un abaque.

Ainsi, en cas d'indisponibilité temporaire des données issues du capteur de vitesse de roue, on régule le couple de serrage en fonction des données issues du modèle physique. De cette manière, on conserve un certain degré de précision dans la commande du couple de serrage malgré une indisponibilité temporaire du capteur de vitesse de roue 32, que le modèle physique permet de suppléer le temps qu'il soit à nouveau disponible. Autrement dit, dans ce deuxième mode de réalisation, le modèle physique remplit une fonction analogue à celle du filtre de prédiction.

Selon un mode de réalisation non illustré sur la [Fig.1], on régule le couple de serrage également en fonction d'une consigne de freinage, la consigne de freinage correspondant à l'acquisition d'un état de la pédale de frein P.

L'invention n'est pas limitée aux modes de réalisation présentés et d'autres modes de réalisation apparaîtront clairement à l'homme du métier. Il est notamment possible d'utiliser un capteur d'effort entre le moteur et l'actionneur pour asservir la commande de couple de freinage.

### Liste de références

10 : organe de requête de décélération
12 : modèle de conversion de décélération
14 : organe de contrôle de décélération
16 : organe de détermination de position cible du moteur
18 : modèle de conversion de couple de serrage
20 : organe de contrôle de position du moteur
22 : organe de détermination d'intensité du courant d'alimentation du moteur
24 : organe de contrôle de l'intensité du courant d'alimentation du moteur
25 : commande à flux orienté
26 : organe de calcul de course d'actionneur des moyens de freinage
28 : organe de calcul de couple de serrage
30 : organe de calcul de décélération moteur
32 : capteur de vitesse de roue
34 : calculateur de décélération de roue
36 : dispositif de détection de blocage
38 : système d'antiblocage des roues
P : pédale de frein
I : capteur d'intensité du courant d'alimentation du moteur
R : capteur de rotation du moteur
W : roue du véhicule automobile

## Revendications

1. Procédé de commande de couple de serrage d'un frein électromécanique pour véhicule automobile, le frein comportant un moteur électrique muni d'un arbre rotatif destiné à entraîner des moyens mécaniques de serrage de frein,
**caractérisé en ce qu'il** comprend les étapes suivantes :
- on acquiert des données issues d'un capteur de vitesse de roue (32) effectuant une mesure caractéristique de la vitesse d'au moins une des roues du véhicule,
- on détermine, en fonction des données issues du capteur de vitesse de roue (32), un indicateur de décélération caractéristique de l'accélération du véhicule,
- on régule le couple de serrage en fonction de l'indicateur de décélération.

2. Procédé de commande selon la revendication 1, dans lequel un actionneur modifie des moyens de friction en fonction du couple de serrage ainsi régulé.

3. Procédé de commande selon la revendication 1 ou 2, dans lequel le capteur de vitesse de roue (32) fait partie d'un système d'antiblocage de roues (38) ou de contrôle électronique de la trajectoire déjà présent dans le véhicule.

4. Procédé de commande selon l'une quelconque des revendications précédentes, dans lequel l'on régule le couple de serrage également en fonction d'un indicateur qui caractérise la position du moteur électrique, dit indicateur de position, calculé en fonction des données issues d'un capteur effectuant une mesure d'un paramètre lié à la rotation de l'arbre du moteur, dit capteur de rotation (R).

5. Procédé de commande selon l'une quelconque des revendications précédentes, dans lequel l'on régule le couple de serrage également en fonction des données issues d'un capteur effectuant une mesure d'un paramètre lié à l'intensité du courant électrique alimentant le moteur électrique, dit capteur de courant (I).

6. Procédé de commande selon l'une quelconque des revendications précédentes, dans lequel on régule le couple de serrage également en fonction d'une consigne de freinage, la consigne de freinage correspondant de préférence à l'acquisition d'un état d'une pédale de frein (P).

7. Procédé de commande selon la revendication 4, dans lequel on enregistre, durant une période prédéterminée, les données issues du capteur de vitesse de roue (32) et l'on construit un modèle physique de l'évolution de la décélération en fonction de l'évolution de l'indicateur de position, ce modèle physique étant fonction des données issues du capteur de vitesse de roue (32) ainsi enregistrées.

8. Procédé de commande selon la revendication 7, dans lequel, en cas d'indisponibilité temporaire des données issues du capteur de vitesse de roue (32), on régule le couple de serrage en fonction des données issues du modèle physique.

9. Procédé de commande selon l'une quelconque des revendications 1 à 6, dans lequel on enregistre, durant une période prédéterminée, les données issues du capteur de vitesse de roue (32) et on les filtre à travers un filtre de prédiction (40), de préférence un filtre de Kalman.

10. Procédé de commande selon la revendication 9, dans lequel, en cas d'indisponibilité temporaire des données issues du capteur de vitesse de roue (32), on régule le couple de serrage en fonction des données issues du filtre de prédiction (40) relatives à un état estimé des données du capteur de vitesse de roue (32).

11. Procédé de commande selon la revendication 3, dans lequel, à l'aide du capteur de vitesse de roue (32), on détecte si au moins une des roues du véhicule est bloquée, et en cas de blocage d'au moins une des roues, le système d'antiblocage des roues (38) ou de contrôle électronique de la trajectoire envoie une commande de couple de serrage du frein électromécanique.

12. Système de freinage **caractérisé en ce qu'**il est apte à mettre en œuvre le procédé selon l'une quelconque des revendications 1 à 11.

13. Véhicule **caractérisé en ce qu'**il comprend le système de freinage selon la revendication 12.

## Patentansprüche

1. Verfahren zur Steuerung des Anzugsmoments einer elektromechanischen Bremse für Kraftfahrzeuge, wobei die Bremse einen Elektromotor aufweist, der mit einer drehbaren Welle versehen ist, die dazu bestimmt ist, mechanische Mittel zum Anziehen der Bremse anzutreiben,
**dadurch gekennzeichnet, dass** es die folgenden Schritte umfasst:
- Erfassen von Daten, die von einem Radgeschwindigkeitssensor (32) stammen, der eine charakteristische Messung der Geschwindigkeit von mindestens einem der Räder des Fahrzeugs vornimmt,
- Bestimmen eines Verzögerungsindikators, der für die Beschleunigung des Fahrzeugs charakteristisch ist, in Abhängigkeit von den vom Radgeschwindigkeitssensor (32) stammenden Daten,
- Regeln des Anzugsmoments in Abhängigkeit von dem Verzögerungsindikator.

2. Steuerungsverfahren nach Anspruch 1, bei dem ein Stellglied Reibungsmittel in Abhängigkeit von dem so geregelten Anzugsmoment verändert.

3. Steuerungsverfahren nach Anspruch 1 oder 2, wobei der Radgeschwindigkeitssensor (32) Teil eines bereits im Fahrzeug vorhandenen Antiblockiersystems (38) oder einer elektronischen Spurkontrolle ist.

4. Steuerungsverfahren nach einem der vorhergehenden Ansprüche, bei dem das Anzugsmoment auch in Abhängigkeit von einem Indikator geregelt wird, der die Position des Elektromotors charakterisiert, dem sogenannten Positionsindikator, der in Abhängigkeit von Daten berechnet wird, die von einem Sensor stammen, der eine Messung eines Parameters durchführt, der mit der Drehung der Motorwelle verbunden ist, dem sogenannten Rotationssensor (R).

5. Steuerungsverfahren nach einem der vorhergehenden Ansprüche, bei dem das Anzugsmoment auch in Abhängigkeit von Daten geregelt wird, die von einem Sensor stammen, der eine Messung eines Parameters vornimmt, der mit der Intensität des den Elektromotor versorgenden elektrischen Stroms verbunden ist, dem sogenannten Stromsensor (1).

6. Steuerungsverfahren nach einem der vorhergehenden Ansprüche, bei dem das Anzugsmoment auch in Abhängigkeit von einem Bremssollwert geregelt wird, wobei der Bremssollwert vorzugsweise der Erfassung eines Zustands eines Bremspedals (P) entspricht.

7. Steuerungsverfahren nach Anspruch 4, bei dem während einer vorbestimmten Zeitdauer die vom Radgeschwindigkeitssensor (32) stammenden Daten aufgezeichnet werden und ein physikalisches Modell der Entwicklung der Verzögerung in Abhängigkeit von der Entwicklung des Positionsanzeigers erstellt wird, wobei dieses physikalische Modell von den vom Radgeschwindigkeitssensor (32) stammenden und so aufgezeichneten Daten abhängt.

8. Steuerungsverfahren nach Anspruch 7, bei dem bei vorübergehender Nichtverfügbarkeit der vom Radgeschwindigkeitssensor (32) stammenden Daten das Anzugsmoment in Abhängigkeit von den aus dem physikalischen Modell stammenden Daten geregelt wird.

9. Steuerungsverfahren nach einem der Ansprüche 1 bis 6, bei dem während eines vorbestimmten Zeitraums die vom Radgeschwindigkeitssensor (32) stammenden Daten aufgezeichnet und durch ein Prädiktionsfilter (40), vorzugsweise ein Kalman-Filter, gefiltert werden.

10. Steuerungsverfahren nach Anspruch 9, bei dem im Falle einer vorübergehenden Nichtverfügbarkeit der vom Radgeschwindigkeitssensor (32) stammenden Daten das Anzugsmoment in Abhängigkeit von den vom Prädiktionsfilter (40) stammenden Daten geregelt wird, die sich auf einen aus Daten des Radgeschwindigkeitssensors (32) geschätzten Zustand beziehen.

11. Steuerungsverfahren nach Anspruch 3, bei dem mithilfe des Radgeschwindigkeitssensors (32) erfasst wird, ob mindestens eines der Räder des Fahrzeugs blockiert ist, und bei Blockierung mindestens eines der Räder das Antiblockiersystem (38) oder die elektronische Spurkontrolle eine Drehmomentsteuerung für die elektromechanische Bremse ausgibt.

12. Bremssystem, **dadurch gekennzeichnet, dass** es geeignet ist, das Verfahren nach einem der Ansprüche 1 bis 11 durchzuführen.

13. Fahrzeug, **dadurch gekennzeichnet, dass** es das Bremssystem nach Anspruch 12 aufweist.

## Claims

1. Method for controlling the tightening torque of an electromechanical brake for a motor vehicle, the brake comprising an electric motor provided with a rotary shaft intended to drive mechanical brake-clamping means,
**characterised in that it** comprises the following steps:
- acquiring data from a wheel speed sensor (32) that takes a characteristic measurement of the speed of at least one of the wheels of the vehicle,
- determining, according to the data from the wheel speed sensor (32), a deceleration indicator characteristic of the acceleration of the vehicle,
- regulating the tightening torque according to the deceleration indicator.

2. Control method according to claim 1, wherein an actuator modifies friction means according to the tightening torque thus regulated.

3. Control method according to claim 1 or 2, wherein the wheel speed sensor (32) is part of an anti-lock braking system (38) or an electronic stability program system already fitted in the vehicle.

4. Control method according to any one of the preceding claims, wherein the tightening torque is also regulated according to an indicator which characterises the position of the electric motor, or position indicator, calculated using the data from a sensor measuring a parameter related to the rotation of the motor shaft, or rotation sensor (R).

5. Control method according to any one of the preceding claims, wherein the tightening torque is also regulated according to the data from a sensor measuring a parameter related to the intensity of the electric current supplying the electric motor, called the current sensor (I).

6. Control method according to any one of the preceding claims, wherein the tightening torque is also regulated according to a braking setpoint, the braking setpoint preferably corresponding to the acquisition of a state of a brake pedal (P).

7. Control method according to claim 4, wherein the data from the wheel speed sensor (32) is recorded during a predetermined period and a physical model of the change in deceleration according to the change in the position indicator is built, this physical model depending on the data from the wheel speed sensor (32) thus recorded.

8. Control method according to claim 7, wherein, if the data from the wheel speed sensor (32) is temporarily unavailable, the tightening torque is regulated according to the data from the physical model.

9. Control method according to any one of claims 1 to 6, wherein the data from the wheel speed sensor (32) is recorded during a predetermined period and filtered by a prediction filter (40), preferably a Kalman filter.

10. Control method according to claim 9, wherein, if the data from the wheel speed sensor (32) is temporarily unavailable, the tightening torque is regulated according to the data from the prediction filter (40) concerning an estimated state of the data from the wheel speed sensor (32).

11. Control method according to claim 3, wherein the wheel speed sensor (32) is used to detect whether at least one of the wheels of the vehicle is locked, and, if at least one of the wheels is locked, the anti-lock braking system (38) or the electronic stability program system sends a command for controlling the tightening torque of the electromechanical brake.

12. Braking system **characterized in that** it is adapted to implement the method according to any one of claims 1 to 11.

13. Vehicle **characterized in that** it comprises the braking system according to claim 12.
